# EUROPEAN PATENT APPLICATION

(11) **EP 2 469 037 A2**
(43) Date of publication of application: **27.06.2012**
(21) Application number: 11193955.9
(22) Date of filing: 16.12.2011
(51) Int. Cl.: F01D 11/02, F01D 25/18

(54) **Water self-sufficient turbine system**

(30) Priority: 22.12.2010 US 975969; 08.02.2011 US 201113023038
(71) Applicant: General Electric Company, Schenectady, New York 12345 (US)
(72) Inventor: Tang, Ching-Jen, Niskayuna, NY New York 12309 (US); Shapiro, Andrew Philip, Niskayuna, NY New York 12309 (US); Laing, Donald Gordon, Niskayuna, NY New York 12309 (US); Dhingra, Harish Chandra, Friendswood, TX Texas 77546 (US)
(74) Representative: Cleary, Fidelma

(57) **Abstract**

The present invention provides a water self-sufficient turbine system comprising: (a) a combustion turbine comprising a combustion chamber disposed between an upstream compressor coupled to a downstream turbine section; (b) a water recovery unit configured to contact a first liquid desiccant with a water-rich exhaust gas stream produced by the combustion turbine, and produce a water-enriched liquid desiccant and a water-depleted exhaust gas stream; and (c) a desiccant regenerator unit configured to contact the water-enriched liquid desiccant with hot compressed air to separate water from the water-enriched liquid desiccant to provide water-rich compressed air and to regenerate the first liquid desiccant; wherein the combustion turbine is configured to supply hot compressed air to the desiccant regenerator unit and receive water-rich compressed air from the desiccant regenerator unit, and wherein the desiccant regenerator unit is configured to supply the first liquid desiccant to the water recovery unit.

## Description

### BACKGROUND

This invention relates generally to water self-sufficient turbine systems and methods for operating such systems.

In power generation systems employing combustion turbines to convert fuel into mechanical energy, it has often proven advantageous to co-inject water vapor into the combustion turbine at one or more locations in order to enhance the power output of the turbine. Thus, water vapor is often added to ambient air used in the combustion turbine, or is injected into one or more compressor stages, or is injected directly into the combustion chamber, or some is injected into two or more of such combustion turbine components. Under such circumstances a combustion turbine may consume a significant amount of water unless steps are taken to recover some of the water employed. For example, a power plant having a 100 megawatt nominal power output rating is estimated to consume more than 100 gallons of water per minute in steam provided to combustion turbines for power augmentation and NOx control.

There is growing interest in industrial and civic processes which recover and reuse process water. See, for example, United States patent 6804964 which discloses a scheme for recovering water from hot turbine exhaust. In regions where water is in short supply, the advantages of such processes are highlighted.

Despite the impressive technical achievements made to date, further enhancements are needed as limited water resources are used for an ever-growing number of human activities. The present invention provides additional enhancements and insights useful in industrial process water recovery and reuse.

### BRIEF DESCRIPTION

From a first aspect, the present invention resides in a water self-sufficient turbine system comprising: (a) a combustion turbine comprising a combustion chamber disposed between an upstream compressor coupled to a downstream turbine section; (b) a water recovery unit configured to contact a first liquid desiccant with a water-rich exhaust gas stream produced by the combustion turbine, and produce a water-enriched liquid desiccant and a water-depleted exhaust gas stream; and (c) a desiccant regenerator unit configured to contact the water-enriched liquid desiccant with hot compressed air to separate water from the water-enriched liquid desiccant to provide water-rich compressed air and to regenerate the first liquid desiccant; wherein the combustion turbine is configured to supply hot compressed air to the desiccant regenerator unit and receive water-rich compressed air from the desiccant regenerator unit, and wherein the desiccant regenerator unit is configured to supply the first liquid desiccant to the water recovery unit.

In a further aspect, the present invention resides in a method of operating a water self-sufficient turbine system comprising: (a) introducing air and fuel into a combustion turbine comprising an upstream compressor, a combustion chamber, and a downstream turbine section to produce a water-rich exhaust gas stream and a hot compressed air slip stream; (b) contacting the water-rich exhaust gas stream in a water recovery unit with a first liquid desiccant to produce a water-depleted exhaust gas stream and a water-enriched liquid desiccant; (c) contacting the water-enriched liquid desiccant in a desiccant regenerator unit with the hot compressed air slip stream to regenerate the first liquid desiccant and a stream of water-rich compressed air; and (d) introducing at least a portion of the water-rich compressed air into the combustion turbine.

Other embodiments, aspects, features, and advantages of the invention will become apparent to those of ordinary skill in the art from the following detailed description, the accompanying drawings, and the appended claims.

### BRIEF DESCRIPTION OF THE DRAWING FIGURES

Embodiments of the present invention will now be described, by way of example only, with reference to the accompanying drawings in which:
Fig. 1 is a schematic view of a turbine system according to one or more embodiments of the invention;
Fig. 2 is a schematic view of a turbine system according to one or more embodiments of the invention;
Fig. 3 is a schematic view of a turbine system according to one or more embodiments of the invention; and
Fig. 4 is a schematic view of a turbine system according to one or more embodiments of the invention.

### DETAILED DESCRIPTION

In the following specification and the claims which follow, reference will be made to a number of terms, which shall be defined to have the following meanings.

The singular forms "a", "an" and "the" include plural referents unless the context clearly dictates otherwise.

"Optional" or "optionally" means that the subsequently described event or circumstance may or may not occur, and that the description includes instances where the event occurs and instances where it does not.

As used herein, the term "solvent" can refer to a single solvent or a mixture of solvents.

Approximating language, as used herein throughout the specification and claims, may be applied to modify any quantitative representation that could permissibly vary without resulting in a change in the basic function to which it is related. Accordingly, a value modified by a term or terms, such as "about", is not to be limited to the precise value specified. In some instances, the approximating language may correspond to the precision of an instrument for measuring the value.

As discussed in detail below, the present invention provides water self-sufficient turbine systems. Such water self-sufficient turbine systems are considered "self-sufficient" in that water produced from the fuel used to power the system is recovered and recycled. As those of ordinary skill in the art will appreciate, all schemes directed to the recovery and recycle of a product of a chemical reaction, in this case a fuel combustion reaction producing heat and the combustion products water and carbon dioxide, are prone to losses and such systems typically operate at something less than one hundred percent efficiency with respect to the recovery of a particular product. The present invention provides water self-sufficient turbine systems which recover and reuse in the same system at least a portion of the water produced from combustion of the fuel used to power the system. In one embodiment, the water self-sufficient turbine system recovers and reuses at least forty-five percent of the water produced from combustion of the fuel used to power the system. In an alternate embodiment, the water self-sufficient turbine system recovers and reuses at least seventy percent of the water produced from combustion of the fuel used to power the system. In yet another embodiment, the water self-sufficient turbine system recovers and reuses at least ninety percent of the water produced from combustion of the fuel used to power the system. Such self-sufficiency may be of special relevance where the turbine system is located in a region having a paucity of water resources. As noted, it has been found advantageous to introduce water at various locations in a combustion turbine in order to enhance the efficiency of the combustion turbine.

The water self-sufficient turbine system comprises a combustion turbine comprising a combustion chamber where fuel (typically natural gas), and a hot, compressed oxidant gas (typically hot compressed air) are ignited and undergo conversion to heat and combustion products, principally water and carbon dioxide. The combustion chamber is typically disposed between an upstream compressor which is used to produce the hot compressed oxidant gas, and a downstream turbine section which converts at least a portion of the kinetic energy of the hot combustion products into mechanical energy. Combustion turbines of the type just described are articles of commerce and are widely used in the production of electricity.

The combustion turbine produces a relatively hot, water-rich exhaust gas stream from which, as disclosed herein, water may be recovered for reuse. The water-rich exhaust gas stream is routed, either directly or indirectly to a water recovery unit in which unit the water-rich exhaust gas stream is brought into contact with a first liquid desiccant. In one embodiment, this contact is characterized by countercurrent flow of the water-rich exhaust gas stream and the first liquid desiccant. Contact between the water-rich exhaust gas stream and the first liquid desiccant in the water recovery unit results in the formation of a water-enriched liquid desiccant and a water-depleted exhaust gas stream as water is absorbed from the water-rich exhaust gas stream by the first liquid desiccant. As is disclosed herein, the water-enriched liquid desiccant is retained and serves as a source of water for operation of the combustion turbine. The water-depleted exhaust gas stream may be released into the environment or stored as desired.

Typically, the water-rich exhaust gas stream emerges from the combustion turbine at a temperature which is too high to achieve efficient transfer of water from the water-rich exhaust gas stream to the first liquid desiccant. For example, in some instances the temperature of the water-rich exhaust gas stream may be higher than the boiling point of the first liquid desiccant under the prevailing conditions, and therefore at least some of the heat contained in the water-rich exhaust gas stream is removed prior to its introduction into the water recovery unit. For example, the water-rich exhaust gas stream emerging from the combustion turbine may be passed through a heat recovery steam generator unit which removes heat from the water-rich exhaust gas stream and uses the heat removed to generate steam which may be used for a variety of purposes, for example to drive turbomachinery.

In one embodiment, the first liquid desiccant is an inorganic liquid desiccant, for example an aqueous solution of one or more inorganic salts in water, at times herein referred to as a first inorganic liquid desiccant. In an alternate embodiment, the first liquid desiccant is a hybrid inorganic-organic liquid desiccant comprising a solution of one or more inorganic salts, water, and one or more organic compounds. Alternatively, the first liquid desiccant may be an organic desiccant, for example a hydrophilic organic solvent or mixture of solvents, optionally containing one or more hygroscopic organic compounds.

Suitable inorganic liquid desiccants include relatively concentrated solutions of alkali metal halides, alkali metal nitrates, alkali metal nitrites, alkaline earth metal halides, alkaline earth metal nitrates, alkaline earth metal nitrites, and transition metal halides. Thus, in one embodiment the first liquid desiccant used according to the method of the present invention is a first inorganic liquid desiccant comprising one or more salts selected from the group consisting of alkali metal halides, alkali metal nitrates, alkali metal nitrites, alkaline earth metal halides, alkaline earth metal nitrates, alkaline earth metal nitrites, and transition metal halides. In one embodiment, the first inorganic liquid desiccant comprises a mixture of lithium bromide and lithium chloride in water. In an alternate embodiment, the first inorganic liquid desiccant comprises calcium chloride. In various embodiments, the first inorganic liquid desiccant is stabilized with respect to crystallization of one or more components by the addition of a crystallization inhibitor. Principals and techniques of inhibition of crystallization in systems such as the inorganic liquid desiccants employed herein using such inhibitors are known to those of ordinary skill in the art.

Those of ordinary skill in the art will appreciate that the term "relatively concentrated" refers to the concentration of a solute (in one embodiment an inorganic salt) in a solvent (in one embodiment water) within about fifty percent of the saturation limit of the solute in the solvent under conditions prevailing just prior to the first liquid desiccant's being introduced into the water recovery unit. Thus in one embodiment the first liquid desiccant comprises a solute dissolved in a solvent, and the concentration of the solute in the solvent is about fifty percent of the saturation limit of the solute in the solvent. In an alternate embodiment, the first liquid desiccant comprises a solute dissolved in a solvent, and the concentration of the solute in the solvent is about seventy percent of the saturation limit of the solute in the solvent. In yet another embodiment, the first liquid desiccant comprises a solute dissolved in a solvent, and the concentration of the solute in the solvent is about ninety percent of the saturation limit of the solute in the solvent. In yet another embodiment, the first liquid desiccant comprises a solute dissolved in a solvent, and the concentration of the solute in the solvent is about ninety-eight percent of the saturation limit of the solute in the solvent.

Suitable organic liquid desiccants include hygroscopic organic liquids such as ethylene glycol, ethanol, dimethyl sulfoxide, dimethyl formamide, N-methyl pyrrolidone and mixtures thereof. In one embodiment, the first liquid desiccant is an organic desiccant comprising a C₁-C₅ alcohol. C₁-C₅ alcohols are exemplified by methanol (C₁), ethanol (C₂), propanol (C₃), isopropanol (C₃), butanol (C₄), isobutanol (C₄), pentanol (C₅), and isopentanol (C₅). In one embodiment, the first liquid desiccant is an organic desiccant comprising one or more hygroscopic organic ammonium salts in a hygroscopic solvent such as dimethyl sulfoxide. In an alternate embodiment, the first liquid desiccant is an organic desiccant comprising one or more hygroscopic organic ammonium salts in a non-hygroscopic solvent such as meta-xylene. Suitable organic ammonium salts include tetramethyl ammonium chloride, butyl trimethyl ammonium bromide, tetramethyl ammonium fluoride, and the like.

As noted, the first liquid desiccant may be a hybrid inorganic-organic liquid desiccant comprising a solution of one or more inorganic salts, water, and one or more organic compounds. Suitable hybrid inorganic-organic liquid desiccants are exemplified by solutions containing one or more salts selected from the group consisting of alkali metal halides, alkali metal nitrates, alkali metal nitrites, alkaline earth metal halides, alkaline earth metal nitrates, alkaline earth metal nitrites, and transition metal halides; water; and a hygroscopic organic compound, for example dimethyl sulfoxide.

The water-enriched liquid desiccant produced in the water recovery unit typically differs in composition from the first liquid desiccant only by the amount of water each contains. In embodiments in which the first liquid desiccant contains water (i.e. the first liquid desiccant is not "water free"), the water-enriched liquid desiccant typically comprises from about 0.1 to about 20 percent more water than the first liquid desiccant. In one embodiment, the water-enriched liquid desiccant comprises from about 0.1 to about 10 percent more water than the first liquid desiccant. In yet another embodiment, the water-enriched liquid desiccant comprises from about 0.1 to about 5 percent more water than the first liquid desiccant. In embodiments in which the first liquid desiccant does not contain water, or contains only very limited amounts of water, the concept of percent increase in water content can be misleading, and it is convenient to describe the enhanced water content of the water-enriched liquid desiccant in terms of the weight percent water present in the in the water-enriched liquid desiccant. Thus, in one embodiment the first liquid desiccant is an organic desiccant comprising from 0.1 percent to about 2 percent by weight water and the corresponding water-enriched liquid desiccant comprises from about 0.5 to about 20 percent by weight water.

As noted, the water-enriched liquid desiccant is retained and serves as a source of water for operation of the combustion turbine. Thus, the water-enriched liquid desiccant is introduced into a desiccant regenerator unit where the water-enriched liquid desiccant is contacted with a hot compressed gas (typically hot compressed air) supplied by the combustion turbine and capable of entraining water from the water-enriched liquid desiccant. In one embodiment, this contact is characterized by countercurrent flow of the water-enriched liquid desiccant and hot compressed gas. Contact between the water-enriched liquid desiccant and the hot compressed gas results in the regeneration of the first liquid desiccant and water-rich compressed gas. The desiccant regenerator unit is configured to supply the regenerated first liquid desiccant to the water recovery unit. The hot compressed gas may be produced as a slip stream taken from the upstream compressor portion of the combustion turbine and routed to the desiccant regenerator unit. The water-rich compressed gas is routed from the desiccant regenerator unit and introduced at one or more locations in the combustion turbine to improve the overall performance of the combustion turbine. Those of ordinary skill in the art will understand that the water-rich compressed gas, typically water-rich compressed air, may be introduced downstream of the point or points at which the hot compressed gas is removed from the upstream compressor portion of the combustion turbine in order to minimize the amount of water present in the hot compressed gas presented to the desiccant regenerator unit. Under such circumstances, the combustion turbine is said to be configured to supply hot compressed gas to the desiccant regenerator unit, and is said to be configured to receive water-rich compressed gas from the desiccant regenerator unit. Although some losses of water and liquid desiccant components are inevitable, the turbine system provided by the present invention is designed such that the amounts of additional water and first liquid desiccant added during operation of the system are minimized.

In one embodiment, the water self-sufficient turbine system provided by the present invention comprises a plurality of water recovery units. In one embodiment, the water self-sufficient turbine system provided by the present invention comprises a plurality of desiccant regenerator units. In one embodiment, the water self-sufficient turbine system provided by the present invention comprises at least one dedicated water recovery unit and at least one dedicated desiccant regenerator unit. In an alternate embodiment, the water self-sufficient turbine system provided by the present invention comprises a single recovery-regenerator unit which serves alternately as a water recovery unit and a desiccant regenerator unit.

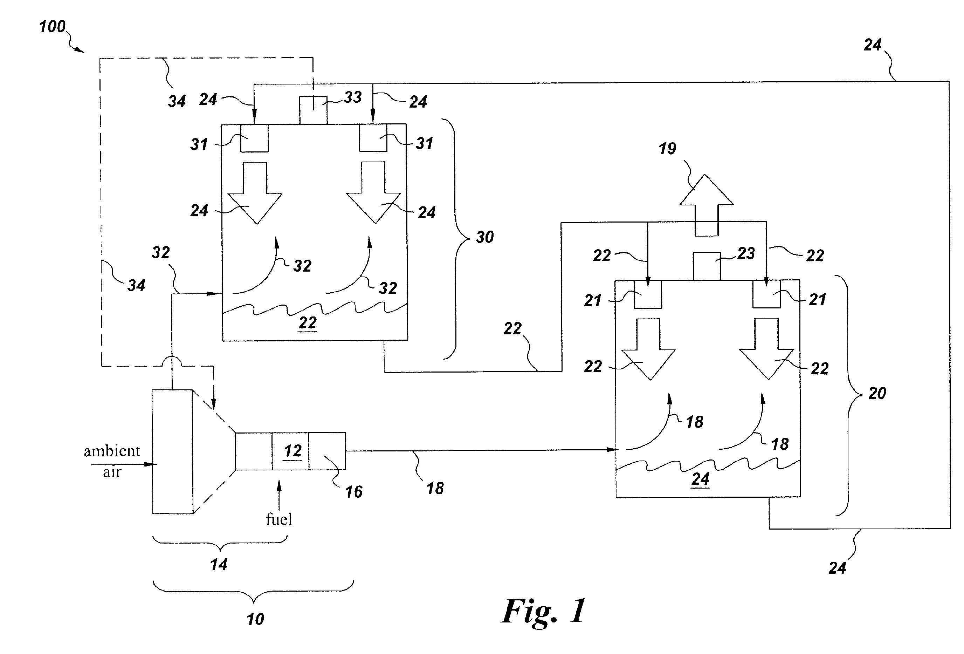

This written description uses examples in the form of schematic figures to disclose the invention, including the best mode, and also to enable any person skilled in the art to practice the invention, including making and using any devices or systems and performing any incorporated methods. Thus, referring to FIG. 1, the figure illustrates a water self-sufficient turbine system 100 provided by the present invention and operating under steady state conditions. Thus, ambient air and fuel are introduced into a combustion turbine 10 comprising an upstream compressor 14 into which the ambient air is introduced, a combustion chamber 12 into which the fuel is introduced, and a downstream turbine section 16. The fuel is combusted in the combustion chamber in the presence of air compressed by the upstream compressor and produces a water-rich exhaust gas stream 18 which is conveyed to a water recovery unit 20. In the water recovery unit, the water-rich exhaust gas stream 18 is contacted with a first liquid desiccant 22. As shown in the figure, the first liquid desiccant 22 is introduced as a liquid, for example a sprayed liquid, through inlets 21 (also at times herein referred to as an inlet for first liquid desiccant) into the water recovery unit 20 where it contacts a counter flowing current of the water-rich exhaust gas stream 18. Water is transferred from the water-rich exhaust gas stream 18 to the first liquid desiccant 22. The amount of water recovered from the water-rich exhaust gas stream may be optimized by controlling the relative amounts of first liquid desiccant and water-rich exhaust gas stream introduced into the water recovery unit, along with other operating parameters such as temperature. In general, greater amounts of water may be removed from the water-rich exhaust gas stream when the weight ratio of the first liquid desiccant to the water-rich exhaust gas stream is relatively high. For example, in one embodiment the weight ratio of the first liquid desiccant to the water-rich exhaust gas stream being introduced into the water recovery unit is in a range from about 1 to about 500. In an alternate embodiment, the weight ratio of the first liquid desiccant to the water-rich exhaust gas stream being introduced into the water recovery unit is in a range from about 1 to about 100. In yet another embodiment, the weight ratio of the first liquid desiccant to the water-rich exhaust gas stream being introduced into the water recovery unit is in a range from about 1 to about 25.

Still referring to FIG.1, the water recovery unit 20 produces a water-depleted exhaust gas stream 19 and water-enriched liquid desiccant 24. In the embodiment shown, the water-depleted exhaust gas stream is vented to the atmosphere through outlet 23. In an alternate embodiment, the water-depleted exhaust gas stream is directed to one or more additional water recovery units 20. In an alternate embodiment, the water-depleted exhaust gas stream is directed to a carbon dioxide utilization or sequestration system. The water-enriched liquid desiccant 24 is routed to a desiccant regenerator unit 30 where it is contacted with hot compressed air 32 generated by the upstream compressor 14 of combustion turbine 10. In the embodiment featured in FIG.1, the water-enriched liquid desiccant 24 is introduced as a liquid spray via inlets 31 and contacts the hot compressed air as a counter flowing gas stream which exits the desiccant regenerator unit via outlet 33. Water is transferred from the water-enriched liquid desiccant to the hot compressed air 32 which exits the desiccant regenerator unit as water-rich compressed air stream 34. As in the water recovery unit, the amount of water recovered from the water-enriched liquid desiccant may be optimized by controlling the relative amounts of hot compressed air and water-enriched liquid desiccant being introduced into the desiccant regenerator unit. Typically, the weight ratio of the water-enriched liquid desiccant to hot compressed air stream being introduced into the desiccant regenerator unit is in a range from about 1 to about 500.

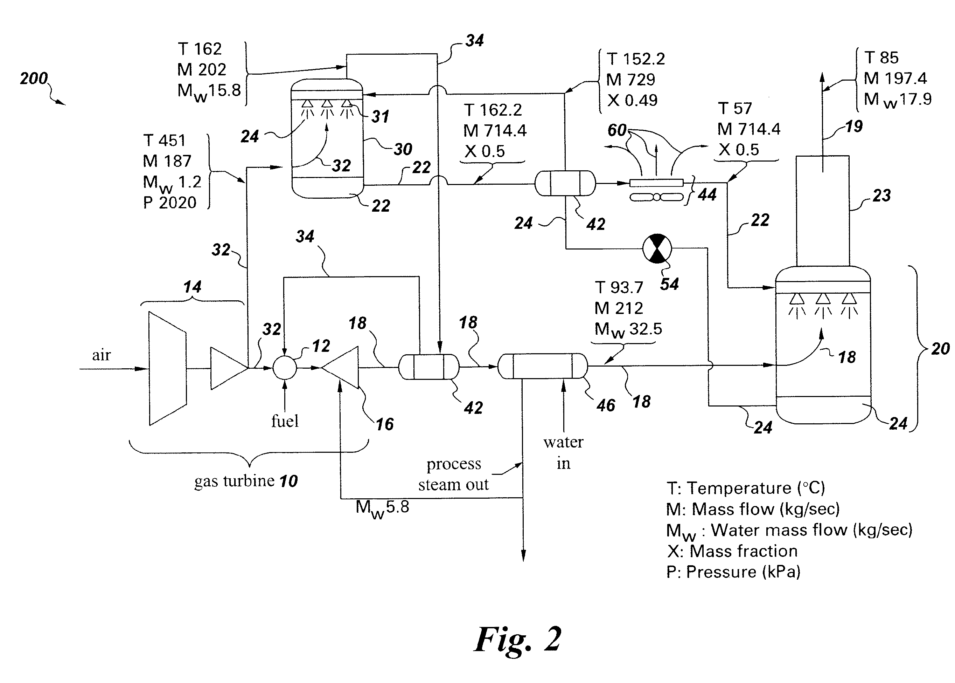

The water-rich compressed air stream 34 emerging from the desiccant regenerator unit is directed back to the combustion turbine 10 where it is injected at one or more locations within the combustion turbine, thereby improving the overall efficiency of the combustion turbine. As water is transferred from the water-enriched liquid desiccant 24 to the hot compressed air stream 32, the desiccant regenerator unit regenerates the first liquid desiccant 22 which is returned to water recovery unit 20. Referring to FIG.2, the figure illustrates a water self-sufficient turbine system 200 provided by the present invention and operating under steady state conditions. Ambient air is introduced into a combustion turbine 10 which compresses and heats the air in an upstream compressor 14 to provide hot compressed air 32 which may be directed entirely to a combustion chamber 12, may be directed entirely to a desiccant regenerator unit 30, or partitioned such that a portion of the hot compressed air 32 produced by the upstream compressor 14 is directed to the combustion chamber and a portion of the hot compressed air 32 produced by the upstream compressor 14 is directed to the desiccant regenerator unit 30. In various embodiments of the present invention, compressed 32 is relatively hot, and in the embodiment shown in FIG.2 emerges from the upstream compressor 14 at a temperature in excess of 400°C and is directed to the desiccant regenerator unit 30. Although in the embodiment featured in FIG.2, hot compressed air 32 is shown as emerging from the upstream compressor 14 and partitioned between the desiccant regenerator unit 30 and the combustion chamber 12, the values appended to FIG.2 for temperature (T), Mass Flow (M), Water Mass Flow (M_{w}), Mass Fraction (X), and Pressure (P) were calculated for an embodiment in which the entire output of the upstream compressor 14 was routed to desiccant regenerator unit 30. As noted in the discussion of FIG.1 herein, the desiccant regenerator unit produces a water-rich compressed air stream 34, which in the embodiment shown in FIG.2 is routed to the combustion chamber 12 of the combustion turbine 10, at times herein referred to as a gas turbine, via heat exchanger 42 which transfers heat produced in the combustion turbine to the water-rich compressed air 34 prior to its introduction into the combustion chamber.

As discussed with respect to FIG.1, fuel and hot water-rich compressed air 34 are introduced into and combusted in combustion chamber 12 and the hot combustion product gases, principally carbon dioxide and water vapor exit the combustion turbine as a water-rich exhaust gas stream 18. In the embodiment shown in FIG.2, the water-rich exhaust gas stream 18 transfers at least a portion of the heat it contains to water-rich compressed air 34 in the adjacent heat exchanger 42. Additional heat is removed from water-rich exhaust gas stream 18 in heat recovery steam generator unit 46 which generates process steam which may be used for a variety of purposes. The water-rich exhaust gas stream 18 emerges from the heat recovery steam generator unit and is routed to a water recovery unit 20 where it is contacted with the first liquid desiccant 22 to generate water-enriched liquid desiccant 24 and water-depleted exhaust gas stream 19. The water-enriched liquid desiccant 24 is routed via pump 54 to desiccant regenerator unit 30 where it is converted back to first liquid desiccant 22 which is returned to water recovery unit 20.

At various locations in the embodiment shown in FIG.2, values are given for temperature (T, in degrees centigrade (°C)), total mass flow rate (M, in kilograms per second (kg/s)), water mass flow rate (M_{w}, in kilograms per second (kg/s)), mass fraction (X), and pressure (P, in kilopascals (kPa)). These represent essentially steady state conditions obtained using a commercial computer modeling program for a hypothetical water self-sufficient turbine system 200 configured as shown in FIG.2 comprising a 100 megawatt (nominal capacity and reference point for the model system) combustion turbine 10, 50% lithium bromide in water as the first liquid desiccant 22 and operating at a water recovery efficiency of about 45%. Thus, under steady state conditions and forty-five percent water recovery efficiency, water-rich exhaust gas stream 18 produced by a 100 megawatt combustion turbine may be introduced (following heat removal) into water recovery unit 20 at a temperature of 93.7 °C at a total mass flow rate of 212 kg/s and a water mass flow of 32.5 kg/s. Under steady state conditions, the first liquid desiccant 22 (50% LiBr in water, X_{LiBr} = X_{H2O} = 0.5) is fed to the water recovery unit 20 at a temperature of 57 °C at a total mass flow rate of 714.4 kg/s. The mass fraction, X, of lithium bromide in the first liquid desiccant 22 was 0.5 in the model system. In the model system, a water-depleted exhaust gas stream 19 was continuously removed from the water recovery unit and was characterized at steady state by a temperature of 85 °C, a total mass flow rate of 197.4 kg/sec, and a water flow rate of 17.9 kg/s. This corresponds to a water recovery efficiency in the water recovery unit of about 45%. The model predicts that under steady state conditions the water-enriched liquid desiccant 24 will emerge from the water recovery unit at the same temperature as the water-depleted exhaust gas stream 19 (85°). In the embodiment shown in FIG.2, the water-enriched liquid desiccant 24 is routed to desiccant regenerator unit 30 via pump 54 and heat exchanger 42 such that at steady state, water-enriched liquid desiccant 24 is introduced into the desiccant regenerator unit via inlets 31 at a temperature of 152.2°C at a total mass flow rate of 729 kg/sec. The mass fraction, X, of lithium bromide in the water-enriched liquid desiccant 24 is 0.49. Correspondingly, the mass fraction of water in the water-enriched liquid desiccant 24 is 0.51. Additional details provided by the modeling study are given in FIG.2 and support the overall attractiveness of the water self-sufficient turbine system configuration provided by the present invention.

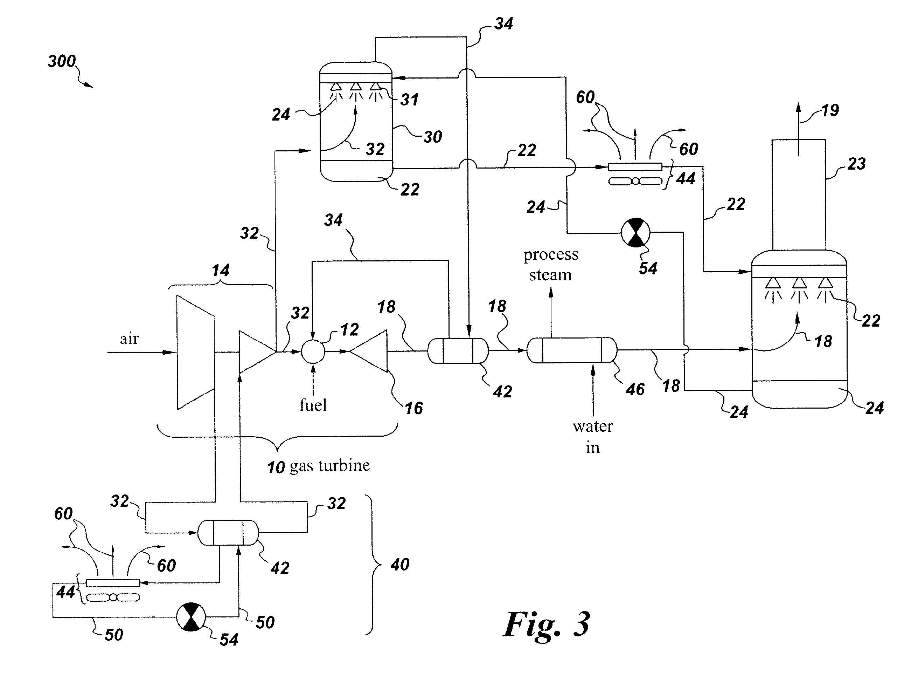

Referring to FIG. 3, the figure illustrates a water self-sufficient turbine system 300 provided by the present invention. Ambient air is introduced into an upstream compressor 14 a combustion turbine 10 where it is compressed to form hot compressed air 32. In the embodiment shown in FIG. 3, at least a portion of the compressed air 32 is directed to a turbine intercooler unit 40. The turbine intercooler unit 40 comprises a heat exchanger 42 which transfers heat from the compressed air to a chilled fluid 50. Heat 60 transferred to the chilled fluid 50 is removed by cooling unit 44. Compressed air 32 from the turbine intercooler unit is then introduced back into one or more compression stages of upstream compressor 14 which further compresses the air to produce relatively hot and relatively high pressure compressed air which is routed to and used in desiccant regenerator unit 30. In the embodiment featured in FIG.3, the hot compressed air 32 output of the upstream compressor 14 is divided into a first stream of hot compressed air 32, at times herein referred to as a slip stream, which is routed to the desiccant regenerator unit 30, and a second stream of hot compressed air 32 which is routed directly to combustion chamber 12.

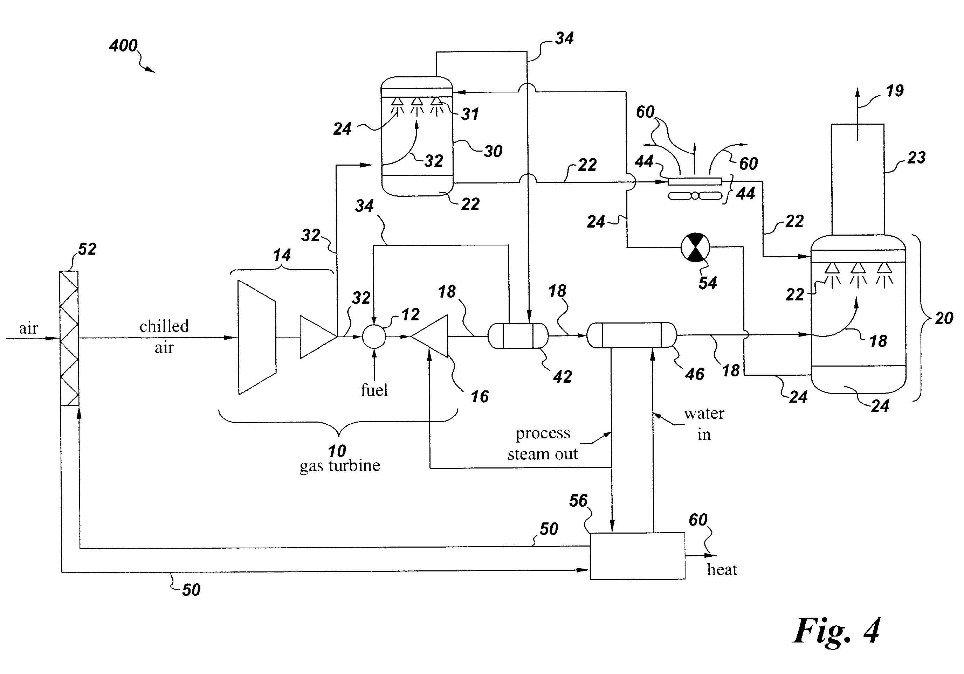

Referring to FIG. 4, the figure illustrates a water self-sufficient turbine system 400 provided by the present invention. In the embodiment featured in FIG.4 ambient air is introduced to cooling coil 52 which chills the air being fed to gas turbine 10 prior to compression in upstream compressor 14. Cooling coil 52 is connected to absorption chiller 56 which acts as a heat sink in the illustrated embodiment.

The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the invention are defined by the following numbered clauses:
1. A method of operating a water self-sufficient turbine system comprising:
   (a) introducing air and natural gas into a combustion turbine comprising an upstream compressor, a combustion chamber, and a downstream turbine section to produce a water-rich exhaust gas stream and a hot compressed air slip stream;
   (b) contacting the water-rich exhaust gas stream having an initial temperature in a range from about 70 to about 110°C in a water recovery unit with a first inorganic liquid desiccant having an initial temperature in a range from about 50 to about 90°C to produce a water-depleted exhaust gas stream and a water-enriched inorganic liquid desiccant;
   (c) contacting the water-enriched inorganic liquid desiccant having an initial temperature in a range from about 70 to about 180°C in a desiccant regenerator unit with the hot compressed air slip stream having an initial temperature in a range from about 350 to about 500°C to regenerate the first inorganic liquid desiccant and a stream of water-rich compressed air; and
   (d) introducing at least a portion of the water-rich compressed air into the combustion turbine.
2. The method according to clause 1, wherein a weight ratio of the first inorganic liquid desiccant to water-rich exhaust gas stream being introduced into the water recovery unit is in a range from about 1 to about 500.
3. The method according to clause 1, wherein a weight ratio of the water-enriched liquid desiccant to hot compressed air stream being introduced into the desiccant regenerator unit is in a range from about 1 to about 500.
4. The method according to clause 1, wherein the first inorganic liquid desiccant comprises one or more salts selected from the group consisting of alkali metal halides, alkali metal nitrates, alkali metal nitrites, alkaline earth metal halides, alkaline earth metal nitrates, alkaline earth metal nitrites, and transition metal halides.
5. The method according to clause 1, wherein the inorganic liquid desiccant comprises a mixture of lithium bromide and lithium chloride.
6. The method according to clause 1, wherein the first inorganic liquid desiccant comprises calcium chloride.
7. The method according to clause 1, wherein the first inorganic liquid desiccant comprises a crystallization inhibitor.

## Claims

1. A water self-sufficient turbine system comprising:
(a) a combustion turbine (10) comprising a combustion chamber (12) disposed between an upstream compressor (14) coupled to a downstream turbine section (16);
(b) a water recovery unit (20) configured to contact a first liquid desiccant (22) with a water-rich exhaust gas stream (18) produced by the combustion turbine (10), and produce a water-enriched liquid desiccant (24) and a water-depleted exhaust gas stream (19); and
(c) a desiccant regenerator unit (30) configured to contact the water-enriched liquid desiccant (24) with hot compressed air to separate water from the water-enriched liquid desiccant (24) to provide water-rich compressed air (34) and to regenerate the first liquid desiccant (22); and
wherein the combustion turbine (10) is configured to supply hot compressed air (32) to the desiccant regenerator unit (30) and receive water-rich compressed air (34) from the desiccant regenerator unit (30), and
wherein the desiccant regenerator unit (30) is configured to supply the first liquid desiccant (22) to the water recovery unit (20).

2. The turbine system according to claim 1, comprising a plurality of water recovery units (20).

3. The turbine system according to claim 1 or 2, comprising a plurality of desiccant regenerator units (30).

4. The turbine system according to any of claims 1 to 3, wherein the combustion turbine (10) is integrated with a turbine intercooler unit (40).

5. The turbine system according to any of claims 1 to 3, wherein the combustion turbine (10) is integrated with a steam generation unit.

6. The turbine system according to any of claims 1 to 5, further comprising a heat exchanger (42) configured to transfer heat from the water-rich exhaust gas stream (18) produced by the combustion turbine (10) to the water-enriched liquid desiccant (24).

7. The turbine system according to any of claims 1 to 5, further comprising a heat exchanger (42) configured to transfer heat from the first liquid desiccant (22) to the water-enriched liquid desiccant (24).

8. A method of operating a water self-sufficient turbine system comprising:
(a) introducing air and fuel into a combustion turbine (10) comprising an upstream compressor (14), a combustion chamber (12), and a downstream turbine section (16) to produce a water-rich exhaust gas stream (18) and a hot compressed air slip stream (32);
(b) contacting the water-rich exhaust gas stream in a water recovery unit (20) with a first liquid desiccant (22) to produce a water-depleted exhaust gas stream (19) and a water-enriched liquid desiccant (24);
(c) contacting the water-enriched liquid desiccant (24) in a desiccant regenerator unit with the hot compressed air slip stream (32) to regenerate the first liquid desiccant (22) and a stream of water-rich compressed air (34); and
(d) introducing at least a portion of the water-rich compressed air (34) into the combustion turbine (10).

9. The method according to claim 8, **characterized by** a water recovery efficiency of at least 45% at steady state.

10. The method according to claim 8, **characterized by** a water recovery efficiency of at least 80% at steady state.

11. The method according to any of claims 8 to 10, wherein the first liquid desiccant (22) is an inorganic liquid desiccant.

12. The method according to claim 11, wherein the inorganic liquid desiccant comprises a mixture of lithium bromide and lithium chloride.

13. The method according to any of claims 8 to 10, wherein the first liquid desiccant (22) comprises an organic desiccant.

14. The method according to claim 13, wherein the organic desiccant comprises ethylene glycol.

15. The method according to claim 14, wherein the organic desiccant comprises C₁-C₅ alcohol.
